# FASCICULE DE BREVET EUROPEEN

(11) **EP 0 549 398 B1**
(45) Date de publication et mention de la délivrance du brevet: **16.08.1995**
(21) Numéro de dépôt: 92403364.0
(22) Date de dépôt: 11.12.1992
(51) Int. Cl.: B23K 35/38, B23K 1/008

(54) **Procédé de soudage ou de brasage de pièces en métal fortement oxydable**
Verfahren zum Schweissen oder Hartlöten von stark oxidierbaren Metalle
Process for welding or brazing strongly oxidisable metals

(30) Priorité: 12.12.1991 FR 9115423
(43) Date de publication de la demande: 30.06.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Duchateau, Eric, F-78000 Versailles (FR); Claverie, Pierre, F-92100 Boulogne Billancourt (FR)
(74) Mandataire: Le Moenner, Gabriel

(56) Documents cités:
- EP-A- 0 481 839
- FR-A- 2 653 448
- GB-A- 677 213
- GB-A- 770 906
- US-A- 3 294 949
- WELDING AND METAL FABRICATION. vol. 41, no. 3, Mars 1973, HAYWARDS HEATH GBpages 85 - 92 J.D.BOUGHTON ET AL 'FURNACE BRAZING'

## Description

La présente invention concerne les procédés de soudage ou de brasage de pièces en métal fortement oxydable, plus particulièrement le titane et le zirconium, comprenant les étapes de placer les pièces à souder ou à braser dans une enceinte étanche, de créer dans l'enceinte une atmosphère inerte à faible teneur en oxygène et d'effectuer le soudage ou le brasage des pièces dans cette atmosphère.

Dans les procédés de ce type, qui se distinguent des procédés de soudage sous vide, l'établissement dans l'enceinte, classiquement du type "boîte à gants", d'une atmosphère inerte à faible teneur en oxygène (de l'ordre de 100 ppm), impose une phase de purge préalable extrêmement longue, l'obtention de très faibles teneurs en oxygène (inférieures à 50 ppm) étant en pratique extrêmement difficile en raison de phénomènes inévitables de fuite ou de rétrodiffusion.

La Demanderesse a récemment proposé, dans le document FR-A-2,653,448, un procédé d'élaboration d'une atmosphère de traitement thermique de métaux, selon lequel on élimine substantiellement toute trace de gaz oxydant résiduel dans l'atmosphère, par l'injection dans cette atmosphère d'un hydrure gazeux.

La présente invention a pour objet de proposer un procédé du type sus-mentionné permettant de réduire considérablement les teneurs en oxygène résiduelles, qui soit simple, rapide à mettre en oeuvre et de faibles coûts de production, et permettant d'obtenir des soudures d'excellente qualité et avec un meilleur aspect visuel.

La Demanderesse a développé plus avant les connaissances acquises concernant le comportement d'un hydrure de silicium comme "getter"' pour proposer une solution aux problèmes à la base de la présente invention.

Pour ce faire, selon une caractéristique de l'invention, le procédé comprend les étapes de purger, pendant une première phase, l'enceinte avec un gaz inerte choisi dans le groupe constitué de l'argon, l'hélium ou leurs mélanges, puis d'introduire dans l'enceinte, dans une deuxième phase, le gaz inerte et un hydrure de silicium gazeux, typiquement un silane, à une teneur comprise entre 50 et 10 000 ppm rapportée au volume de l'enceinte pour créer dans cette dernière un atmosphère contrôlée à teneur en oxygène résiduelle inférieure à 10 ppm, et d'effectuer le soudage ou le brasage dans ladite atmosphère contrôlée.

Selon un aspect de l'invention, la durée de la première phase est comprise entre 10 et 25 minutes, typiquement d'environ 20 minutes, selon le volume et la configuration de l'enceinte et le débit de balayage du gaz inerte, la teneur en hydrure de silicium dans la deuxième phase étant avantageusement maintenue comprise entre 100 et 5 000 ppm, également selon le volume et la configuration de l'enceinte.

La Demanderesse a constaté que de faibles quantités d'hydrure de silicium gazeux introduites dans l'enceinte permettaient d'éliminer très rapidement l'oxygène résiduel normalement présent dans l'enceinte, dans une gamme de températures très large convenant en particulier au soudage à l'arc. Pour éviter les problèmes, notamment de variation de dureté des zones soudées, dûs à l'azote, le gaz inerte adopté n'est pas l'azote et est avantageusement l'argon. La première phase de balayage, par ce gaz inerte est nécessaire pour éliminer également sensiblement les traces d'azote provenant initialement de l'air. On soulignera à ce propos que la purge et le maintien dans l'enceinte d'une atmosphère constituée exclusivement d'argon pur ne permet pas, en pratique, dans les boîtes à gants existantes, de réduire la teneur en oxygène résiduel à des valeurs inférieures à 100 ppm.

La présente invention sera maintenant décrite en relation avec un mode de réalisation, donné à titre illustratif, mais nullement limitatif.

On place dans une enceinte du type boîte à gants les équipements de soudage des pièces de titane à souder, le titane étant connu pour être particulièrement réactif avec l'oxygène, en particulier à chaud. Dans un premier temps, on remplit l'enceinte avec de l'argon (par exemple 1 m³) puis on soumet l'enceinte à un balayage d'argon à un débit de l'ordre de 15 litres/minute pendant une durée supérieure à 10 minutes, typiquement de l'ordre de 20 minutes. On introduit ensuite dans le flux d'argon 4000 ppm de monosilane. Dans un temps n'excédant pas 5 minutes, la teneur mesurée d'oxygène résiduelle devient inférieure à 5 ppm. On peut alors réduire la quantité de silane injectée continuellement dans le flux d'argon, à une valeur par exemple de l'ordre de 300 ppm, et effectuer le soudage des pièces dans des' conditions d'anoxie parfaite, les soudures se révélant particulièrement nettes et sans inclusions et présentant un aspect brillant et sans taches.

Quoique la présente invention ait été décrite en relation avec un mode de réalisation particulier, elle ne s'en trouve pas limitée pour autant mais est au contraire susceptible de modifications et de variantes qui apparaîtront à l'homme de l'art.
Ainsi, pour une optimisation du procédé, on prévoira dans l'enceinte un capteur d'oxygène associé à un analyseur électronique de contrôle commandant le passage de la première phase à la seconde phase lorsque la teneur en oxygène détecté devient inférieure à une valeur de consigne prédéterminée, comprise typiquement entre 500 ppm et 10 000 ppm rapportée au volume de l'enceinte, la teneur en silane injecté étant, comme précédemment, réduite, dans un deuxième temps de la seconde phase, lorsque la teneur résiduelle détectée devient inférieure à une deuxième valeur de consigne, typiquement de l'ordre de 5 à 10 ppm.

En particulier, selon la géométrie de l'enceinte et les dimensions des pièces à souder, le silane peut être injecté séparément dans l'enceinte en amont de la zone de soudage par rapport à la circulation de gaz inerte, au voisinage de cette dernière, ce qui permet de réduire encore le débit de silane nécessaire.

## Revendications

1. Procédé de soudage ou de brasage de pièces en métal fortement oxydable comprenant les étapes de placer les pièces à souder ou à braser dans une enceinte étanche, de créer dans l'enceinte une atmosphère inerte à faible teneur en oxygène, et d'effectuer le soudage ou le brasage des pièces dans cette atmosphère inerte, caractérisé en ce qu'il comprend les étapes de purger, pendant une première phase, l'enceinte avec un gaz inerte choisi dans le groupe constitué de l'argon, l'hélium ou leurs mélanges, puis d'introduire dans l'enceinte, dans une deuxième phase, le gaz inerte et un hydrure de silicium gazeux à une teneur comprise entre 50 et 10 000 ppm pour créer dans l'enceinte une atmosphère contrôlée ayant une teneur en oxygène inférieure à 10 ppm, et d'effectuer le soudage ou le brasage dans ladite atmosphère contrôlée.

2. Procédé selon la revendication 1, caractérisé en ce que le gaz inerte est l'argon.

3. Procédé selon la revendication 1 ou la revendication 2, caractérisé en ce que la durée de la première phase est comprise entre 10 et 25 minutes.

4. Procédé selon la revendication 1 ou la revendication 2, caractérisé en ce que la deuxième phase est amorcée lorsque la teneur résiduelle en oxygène dans l'enceinte est inférieure à un seuil déterminé compris entre 10 000 et 500 ppm.

5. Procédé selon l'une des revendications 3 ou 4, caractérisé en ce que la teneur en hydrure de silicium dans la deuxième phase est comprise entre 100 et 5000 ppm.

6. Procédé selon l'une des revendications 1 à 5, caractérisé en ce que l'hydrure de silicium est le monosilane.

7. Procédé selon l'une des revendications précédentes, caractérisé en ce que l'hydrure de silicium est pré-mélangé avec le gaz inerte.

8. Procédé selon l'une des revendications 1 à 6, caractérisé en ce que l'hydrure de silicium est introduit séparément dans l'enceinte.

9. Procédé selon l'une des revendications précédentes, caractérisé en ce que les pièces à souder sont en titane.

10. Procédé selon l'une des revendications précédentes, caractérisé en ce que les pièces à souder sont en zirconium.

## Claims

1. Method for welding or brazing highly oxidizable metal components comprising the steps of placing the components to be welded or brazed in an airtight enclosure, creating within the enclosure an inert atmosphere having a low oxygen content, and carrying out the welding or brazing of the components in this inert atmosphere, characterised in that it comprises the steps of, during a first phase, purging the enclosure with an inert gas chosen from the group consisting of argon, helium or mixtures thereof, then, in a second phase, introducing the inert gas and a gaseous silicon hydride into the enclosure at between 50 and 10,000 ppm in order to create a controlled atmosphere in the enclosure having an oxygen content below 10 ppm, and carrying out the welding or brazing in the said controlled atmosphere.

2. Method according to Claim 1, characterised in that the inert gas is argon.

3. Method according to Claim 1 or Claim 2, characterised in that the duration of the first phase is between 10 and 25 minutes.

4. Method according to Claim 1 or Claim 2, characterised in that the second phase is started when the residual oxygen content in the enclosure is below a given threshold lying between 10,000 and 500 ppm.

5. Method according to one of Claims 3 or 4, characterised in that the silicon hydride content in the second phase is between 100 and 5000 ppm.

6. Method according to one of Claims 1 to 5, characterised in that the silicon hydride is monosilane.

7. Method according to one of the preceding claims, characterised in that the silicon hydride is pre-mixed with the inert gas.

8. Method according to one of Claims 1 to 6, characterised in that the silicon hydride is introduced separately into the enclosure.

9. Method according to one of the preceding claims, characterised in that the components to be welded are made of titanium.

10. Method according to one of the preceding claims, characterised in that the components to be welded are made of zirconium.

## Patentansprüche

1. Verfahren zum Schweißen oder Hartlöten stark oxidierbarer Teile aus Metall, umfassend die Schritte des Anordnens der zu schweißenden oder hartzulötenden Teile in einem Behälter, des Erzeugens einer inerten Atmosphäre mit geringem Sauerstoffgehalt in dem Behälter und des Schweißens oder des Hartlötens der Teile in dieser inerten Atmosphäre, dadurch gekennzeichnet, daß das Verfahren die Schritte des Spülens des Behälters mit einem aus der durch Argon, Helium oder deren Gemische gebildeten Gruppe gewählten Gas während einer ersten Phase, des nachfolgenden Einleitens des inerten Gases sowie eines gasförmigen Siliziumhydrids mit einem Gehalt zwischen 50 und 10000 ppm in den Behälter während einer zweiten Phase, um eine kontrollierte Atmosphäre mit einem Sauerstoffgehalt kleiner als 10 ppm in dem Behälter zu erzeugen, und des Schweißens oder des Hartlötens in der kontrollierten Atmosphäre umfaßt.

2. Verfahren nach Anspruch 1, dadurch gekennzeichnet, daß das inerte Gas Argon ist.

3. Verfahren nach Anspruch 1 oder 2, dadurch gekennzeichnet, daß die Dauer der ersten Phase zwischen 10 und 25 Minuten beträgt.

4. Verfahren nach Anspruch 1 oder 2, dadurch gekennzeichnet, daß die zweite Phase eingeleitet wird, wenn der Sauerstoff-Restgehalt im Behälter kleiner als ein vorbestimmter, zwischen 10000 und 500 ppm liegender Schwellenwert ist.

5. Verfahren nach Anspruch 3 oder 4, dadurch gekennzeichnet, daß der Siliziumhydridgehalt in der zweiten Phase zwischen 100 und 5000 ppm liegt.

6. Verfahren nach einem der Ansprüche 1 bis 5, dadurch gekennzeichnet, daß das Siliziumhydrid Monosilan ist.

7. Verfahren nach einem der vorangehenden Ansprüche, dadurch gekennzeichnet, daß das Siliziumhydrid vorab mit dem inerten Gas vermischt wird.

8. Verfahren nach einem der Ansprüche 1 bis 6, dadurch gekennzeichnet, daß das Siliziumhydrid getrennt in den Behälter eingeleitet wird.

9. Verfahren nach einem der vorangehenden Ansprüche, dadurch gekennzeichnet, daß die zu schweißenden Teile aus Titan bestehen.

10. Verfahren nach einem der vorangehenden Ansprüche, dadurch gekennzeichnet, daß die zu schweißenden Teile aus Zirkonium bestehen.
